Europäisches Patentamt

European Patent Office

Office européen des brevets

(11) Veröffentlichungsnummer: **0 013 021**
**B1**

(12) EUROPÄISCHE PATENTSCHRIFT

(45) Veröffentlichungstag der Patentschrift: **13.07.83**

(51) Int. Cl.³: **B 42 D 15/02**

(21) Anmeldenummer: **79105347.3**

(22) Anmeldetag: **21.12.79**

(54) Identitätskarte.

(30) Priorität: **30.12.78 DE 2856852**

(43) Veröffentlichungstag der Anmeldung:
**09.07.80 Patentblatt 80/14**

(45) Bekanntmachung des Hinweises auf die Patenterteilung:
**13.07.83 Patentblatt 83/28**

(84) Benannte Vertragsstaaten:
**BE DE FR GB IT NL**

(56) Entgegenhaltungen:
**DE - A - 2 163 943**
**DE - A - 2 308 876**
**FR - A - 961 181**
**FR - A - 1 347 240**
**FR - A - 2 114 705**
**FR - A - 2 117 055**
**FR - A - 2 147 612**
**FR - A - 2 352 103**
**US - A - 4 092 449**

(73) Patentinhaber: **HOECHST AKTIENGESELLSCHAFT**
**Postfach 80 03 20**
**D-6230 Frankfurt/Main 80 (DE)**

(72) Erfinder: **Moraw, Roland, dr.**
**Buchenweg 4**
**D-6200 Wiesbaden-Naurod (DE)**
Erfinder: **Steinau, Peter, dr.**
**Am Gonsenheimer Spiess 18**
**D-6500 Mainz (DE)**
Erfinder: **Pierson, Fritz**
**Adalbert-Stifter-Strasse 5**
**D-6204 Taunusstein-Hahn (DE)**

Courier Press, Leamington Spa, England.

## Identitätskarte

Die Erfindung betrifft eine Identitätskarte aus zumindest einer äußeren transparenten thermoplastischen Abdeckschicht und einer thermoplastischen Kernschicht, mit der Identifizierung des Karteninhabers dienenden Informationen an geeigneter Stelle auf einer oder mehreren Schichten und mit zusätzlichen Sicherungsmerkmalen, wie Guilloche-Figuren, gegen Fälschungen.

Derartige Karten werden im zunehmenden Maße als Informations- bzw. Datenträger für Personalausweise, Pässe, Scheckkarten, Kreditkarten, Identifikationskarten und dgl. Ausweismittel verwendet, die sowohl gegen totale Fälschungen durch nachgeahmte Karten sowie gegen Verfälschungen durch teilweise Änderung der personenbezogenen Daten gesichert werden müssen.

Bekannte Identifikationskarten werden als verschmolzener Verbund hergestellt, bei dem ein die Informationen tragender Kartenkern durch transparente Folien geschützt ist, die eine andere Beschaffenheit als der Kartenkern besitzen. So beschreibt die DE—OS 2 308 876 eine Identifikationskarte aus relativ dicker Trägerfolie und einer dünnen Klarsichtfolie, zwischen denen sich ein Spezialpapier mit der Fälschungssicherung dienenden, Dickenunterschiede des Papiers hervorrufenden Einlagerungen, wie Wasserzeichen, Banknoten-Druck oder dgl. befindet, wobei die drei Schichten so miteinander plastifiziert sind, daß die Einlagerungen durch die Klarsichtfolie hindurch manuell, mechanisch und/oder visuell feststellbar sind. Weitere, der Identifizierung des Karteninhabers dienende Merkmale sind bei dieser bekannten Identifikationskarte an geeigneter Stelle vorgesehen. Beim Plastifizieren wird beispielsweise eine Fotografie in Form eines Filmdiapositivs zwischen dem Spezialpapier und der Trägerfolie eingebracht und fest mit dem Spezialpapier verbunden. Ebenso kann an einer beliebigen Stelle der Vorder- oder Rückseite der Identifikationskarte ein sicherungstechnisch bedruckter Spezialpapierstreifen außen auf dem Plastikmaterial als Feld für nachträgliche Unterschriften oder sonstige handschriftliche Eintragungen aufkaschiert werden.

Aus der DE—AS 21 63 943 ist eine Personenidentifikationskarte bekannt, die eine Kombination eines Schichtträgers einer elektrisch leitenden Schicht, einer Sperrschicht, einer fotoleitfähigen Schicht mit einem organischen Fotoleiter—gegebenenfalls einer Abdeckschicht-, einer Schutzschicht auf der fotoleitfähigen Schicht oder auf der Abdeckschicht, einer Schutzschicht auf der Rückseite des Schichtträgers und gegebenenfalls einer Abdeckschicht auf der letzgenannten Schutzschicht umfaßt. Bei dieser Personenidentifikationskarte wird eine Anzahl von unterschiedlichen Materialien zu einem Verbund zusammengefügt, der wegen der fehlenden Homogenität der einzelnen Schichten auflösbar ist, so daß Fälschungen vorgenommen werden können.

Die Herstellung dieser Personenidentifikationskarte erfolgt in der Weise, daß die erforderlichen Angaben mit Hilfe einer Offsetdruck-Maschine auf die Innenseite des durchsichtigen, nichtplastischen Polyvinylchloridfilms gedruckt werden. Darauf wird eine Druckfarbenschicht gedruckt, die eine große Deckkraft besitzt und nur die für die Unterschrift und das Foto vorgesehenen Flächen frei läßt. Die fotoleitfähige Schicht mit dem organischen Fotoleiter wird in einer Dunkelkammer mit Hilfe einer Sprühentladung auf eine Spannung von —6 kV aufgeladen, in eine Kamera eingebracht, in der ein Objektiv zum Fotografieren des Karteninhabers und eine Beleuchtungseinrichtung kombiniert sind, ferner ein Objektiv zum Fotografieren von Zeichen mit der Beleuchtungseinrichtung. Nach der bilderzeugenden Belichtung werden die elektrostatischen Bilder mit einem Flüssigentwickler entwickelt, getrocknet und ohne Fixiervorgang mit Hilfe einer Warmpresse auf die fotoleitfähige Schicht der zuvor erstellten Oberflächenschutzschicht aus dem Polyvinylchloridfilm aufgeklebt. Auf die Rückseite wird dann ein durchsichtiger, nichtplastischer Polyvinylchloridfilm gedruckt, der auf seiner Innenseite erforderliche Angaben enthalten kann. Auf die ganze Fläche wird dann noch eine weiße Abdeckschicht gedruckt, die eine als leitende Schicht verwendete Aluminiumfolie verdeckt. Die weiße Abdeckschicht kann auch direkt auf die Rückseite der fotoleitfähigen Schicht mit dem organischen Fotoleiter gedruckt werden oder es kann als Grundplatte des lichtempfindlichen Elements eine milchigweiße Platte verwendet werden.

Aus der FR—A—1.347.240 ist ein Fasermaterial bzw. ein Papier mit eingearbeiteten thermoplastischen Zusätzen bekannt, das unter Druck und Wärme verschweißbar ist, so daß Schichtprodukte, wie beispielsweise Banknotenpapiere, hergestellt werden können. Bei der Zwischenschicht handelt es sich um eine unterbrochene bzw. diskontinuierliche Schicht, die dadurch gebildet wird, daß zwischen den Fibriden enthaltenden Schichten gefärbte Fasern, ein grobmaschiges Stoffgewebe oder geometrische Figuren aus diversen Materialien eingefügt werden. Es finden sich keine Hinweise, daß die Zwischenschicht nach der FR—A—1.347.240 formstabil bei den jeweiligen Kaschierbedingungen ist.

Aus der FR—A—2.147.612 ist ein Papier mit eingelagerten Polyethylenfasern bekannt. Diese Schrift gibt weder eine Anregung in bezug auf eine Stützschicht, die bei vorgegebenen Kaschierbedingungen formstabil ist, noch auf Perforationen dieser Stützschicht, die ein Verschmelzen von zu beiden Seiten der Stützschicht vorhandenen Schichten durch die Perforationen hindurch ermöglichen.

Aufgabe der Erfindung ist es, die Verbundfestigkeit von mehrschichtigen Identitätskarten so zu erhöhen, daß jede Manipulation zum Auftrennen der Identitätskarten zum Scheitern verurteilt ist.

Diese Aufgabe wird erfindungsgemäß dadurch gelöst, daß die Kernschicht mehrschichtig ist und aus einem Material mit eingearbeiteten Fasern bzw. Fibriden besteht, im Inneren eine Stützschicht enthält, die perforiert ist, daß die Stützschicht im Randbereich stärker als im Schichtinneren perforiert ist und daß das Material der Stützschicht beim Zusammenfügen der Kartenschichten unter Druck und Wärme bis zu 180°C formstabil ist.

In Weiterbildung der Erfindung ist das Material der Kernschicht ein Papierfilz mit Polyäthylenfasern oder -fibriden. Dabei beträgt der Anteil an Polyäthylenfasern zumindest 50 Gewichts-%, insbesondere 80 Gewichts-% oder mehr.

Polyolefine wie Polypropylen, insbesondere aber Polyäthylen, zeigen ein Schmelz- und Fließverhalten, das bei Wärmeeinwirkung und vor allem bei zusätzlicher Druckeinwirkung zu einem homogenen Verbund solcher Folien führt. Es bleiben keine latenten, eine Trennung begünstigenden Grenzflächen zurück. Von Vorteil ist auch, daß die Polyolefine praktisch in keinem organischen Lösungsmittel löslich sind.

Die weitere vorteilhafte Ausgestaltung der Erfindung ergibt sich aus den Patentansprüchen 5 bis 11.

Die Erfindung wird im folgenden anhand eines zeichnerisch dargestellten Ausführungsbeispiels näher erläutert.

Es zeigen:

Fig. 1 eine Schnittansicht einer Identitätskarte, bestehend aus zwei Kernschichten, einer Stützschicht und Abdeckfolien, und

Fig. 2 in Explosionsdarstellung die Identitätskarte nach Fig. 1.

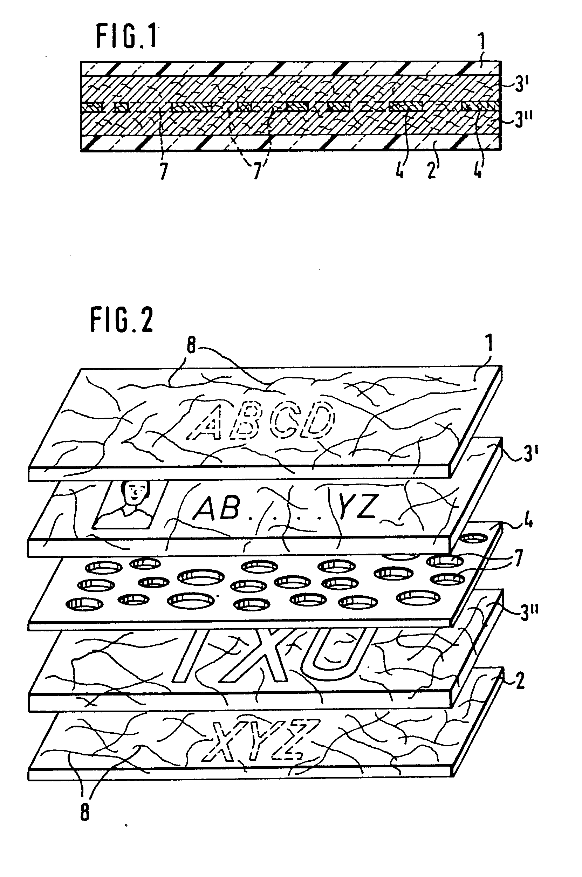

Eine Schnittansicht der Ausführungsform der Identitätskarte ist in Fig. 1 dargestellt, bei der eine Kartenkern aus zwei Kernschichten 3' und 3" besteht, die eine Stützschicht 4 einschließen. Die Kernschichten 3' und 3" sind nach außen hin mit Abdeckschichten 1 und 2 aus transparenten Folien kaschiert. Die Kernschichten 3" und e" bestehen aus einem Material mit eingearbeiteten Fibriden oder Fasern, wobei es sich bei dem Material der Kernschichten 3' und 3" bevorzugt um Papierfilze mit zugesetzten Polyolefinfasern handelt. Für das Mischen mit Zellulosefasern geeignete Fasern bestehen beisspielsweise aus Niederdruckpolyäthylen und ihre Eigenschaften sind einerseits denen von Naturzellstoff ähnlich, andererseits verhalten sie sich wie ein thermoplastischer Kunststoff und schmelzen bei Temperaturen oberhalb von 135°C.

Bei dem in den Fig. 1 und 2 gezeigten Ausführungsbeispiel besteht der Kartenkern aus zwei Schichten, jedoch kann er ebenso aus mehr Schichten aufgebaut sein.

Durch Abmischung mit Polyäthylenfasern in entsprechenden Gewichtsverhältnissen und durch Zusätze von Pigmenten sowie durch den Grad der Satinierung kann die Bedruckbarkeit der Kernschichten in weiten Grenzen den Anforderungen angepaßt werden. Das schließt die Bedruckbarkeit durch Techniken wie elektrofotografische Kopierverfahren mit Hilfe von Fotolieterschichten oder elektrografische Kopierverfahren mit Hilfe von Schreibelektroden ein, bei denen jeweils Tonerbilder erzeugt werden, die bei elektrofotografischen Kopierverfahren auf die Kernschichten übertragen werden oder bei elektrografischen Verfahren mittels der Schreibelektroden und nachfolgender Betonerung direkt auf den Kernschichten erzeugt werden.

Wie aus der Explosionsdarstellung in Fig. 2 ersichtlich ist, trägt die Kernschicht 3' direkt lesbare Informationen wie ein Lichtbild des Karteninhabers, dessen Namen, eine Kennziffer u.dgl., die gegebenenfalls über einem Sicherheitsdruck aufgebracht sind. In Fig. 2 sind schematisch in den Kernschichten 3' und 3" die Fasern bzw. Fibride angedeutet. Polyolefinfibride sind bekanntlich feine, faserartige Gebilde, die stark verzweigt sind; sie unterscheiden sich von den gewöhnlichen Fasern durch ihre hohe spezifische Oberfläche, welche nach der BET-Methode im Bereich von 1 bis 100 $m^2/g$, insbesondere 5 bis 25 $m^2/g$, liegt. Die BET-Methode ist im Journal of the American Chemical Society 60, Seite 309 (1938) beschrieben. Die zu verwendenden Fibride haben eine klassifizierte Länge, d.h. mittlere Faserlänge von 0,05 bis 15 mm, insbesondere 1 bis 3 mm (TAPPI-Norm T 232 und 234). Derartige für das Mischen mit Zellulosefasern geeignete Fasern bzw. Fibride aud Niederdruckpolyäthylen werden von der HOECHST AKTIENGESELLSCHAFT unter dem Warenzeichen HOSTAPULP vertrieben.

Die fibrillierte und hochzerklüftete Beschaffenheit von Hostapulp® ergibt—verglichen mit anderen synthetischen Produkten—eine weichere, flexiblere Faser und zeigt eine enge Faserlängenverteilung und daher optimale Dispergiereigenschaften.

Die Oberflächen der Papierfilze mit Polyäthylenfibriden werden durch Satinierung stark geglättet, jedoch nicht so geschlossen wie die einer homogenen Folie. Auf der Oberfläche können qualitativ einwandfreie elektrofotografische Kopien mit Halbtoncharakter für Lichtbilder bei der Entwicklung der Ladungsbilder auf der Fotoleiterschicht mit Flüssigtoner und Übertragung der Tonerbildung auf die Oberfläche der Papierfilze erzielt werden. Die elektrofotografische bzw. elektrografische Bedruckbarkeit von satinierten Papieren mit Polyäthylenfasern bzw. -fibriden ermöglicht eine sehr wirtschaftliche und schnelle Herstellung von Identitätskarten, da die gesamten personenbezogenen Informationen einschließlich eines Lichtbilds des Karteninhabers in einem Arbeitsgang aufgebracht werden können.

Ein 50%iger Gewichtsanteil der Polyäthylenfasern in einer Identifikationskarte aus zwei Kernschichten, jedoch ohne stutzschicht und zwei äußeren Polyäthylen-Abdeckfolien liefert eine sehr gute Haftung der Schichten untereinander, jedoch ist eine mechanische Trennung im Bereich des Kartenkerns noch möglich. Beträgt der Gewichtsanteil der Polyäthylenfasern 70% und werden die einzelnen Schichten bei einer Temperatur von 160°C und bei einem Druck von 20 bar über eine Zeitspanne von 5 min zusammengepreßt, so ist die Trennung nahezu unmöglich. Die Haftung der Schichten untereinander kann durch eine erhöhte Temperatur von 180°C und einem Druck von 60 bar über eine Zeitspanne von 5 min noch verbessert werden. Bei einem Gewichtsanteil von 50% der Polyäthylenfasern in der einzelnen Schicht erscheint diese ähnlich matt wie herkömmliches weißes Papier. Mit steigendem Anteil der Polyäthylenfasern werden die Schichten transparenter und bei einem Polyäthylenfaser-Anteil von 80 Gewichts-% und darüber die miteinander verpreßten Schichten nahezu völlig durchscheinend, da infolge der Verpressungen und des hohen Polyäthylenanteils die Schichten immer stärker homogenen Folien aus Polyäthylen entsprechen. Das Auslesen und die Betrachtung der Informationen erfolgt in üblicher Weise durch Reflexion des Lichtes auf einem mattweißen Untergrund. Dieser Untergrund wird durch den Zusatz von Pigmenten wie Titandioxid in Anteilen von etwa 10 Gewichts-% zu den Papierfilzen mit sehr hohem Polyäthylenfaseranteil in der Größenordnung von 80 Gewichts-% und darüber erhalten.

Bei der Verpressung von Kernschichten mit hohen Polyäthylenfaseranteilen mit Abdeckschichten aus Polyäthylenfolien besteht infolge der hohen Temperaturen und der großen Drücke die Gefahr, daß die Karten der Breite nach zerfließen und dadurch die Informationen verwaschen werden, so daß die Identitätskarte als solche unbrauchbar wird. Um dieser Gefahr vorzubeugen, wird in den Kartenkern, der aus zwei Kernschichten 3' und 3" besteht, die Stützschicht 4 eingebracht. Diese Stützschicht 4 ist porös oder perforiert und ihr Material ist bei den auftretenden Verpressungstemperaturen weitgehend formstabil, d.h. zeigt kein thermoplastisches Verhalten.

Beispielsweise wurde eine Identitätskarte mit den Abmessungen 125 mm×90 mm trennfest und verzerrungsfrei hergestellt, die folgenden Kartenaufbau besitzt: Die obere Abdeckschicht 1 ist eine transparente Polyäthylenfolie von 100 μm Dicke, die Kernschicht 3' besteht aus einem Papier mit 80 Gewichts-% Polyäthylenfasern und 12 Gewichts-% Titandioxid, besitzt eine Dicke von 200 μm, die Stützschicht 4 ist ein mit Löchern von 2 mm Durchmesser und 3 mm Mittelpunktsabstand benachbarter Löcher perforiertes weißes Schreibmaschinenpapier der Dicke von 150 μm, die Kernschicht 3" ist ein mit Sicherheitsdrucken bedrucktes Papier mit 80 Gewichts-% Polyäthylenfasern und 12 Gewichts-% Titandioxid und hat eine Dicke von 200 μm und die untere Abdeckschicht 2 ist wiederum eine transparente Polyäthylenfolie der Dicke von 100 μm.

Die Stützschicht 4 kann entsprechend den gestellten Anforderungen sehr unterschiedlich gestaltet sein. Sie kann aus Filzen wie Papieren, gegebenenfalls mit einem Anteil in der Größenordnung von bis zu 50 Gewichts-% Polyäthylenfasern, aus Polyester-Folien, aus Siebdruckgewebe oder sonstigen, ein formstabiles Verhalten bei den Verpressungsdrücken und -temperaturen zeigenden Materialien bestehen. Auch die Lochdurchmesser und/oder Lochformen können in weiten Grenzen variieren, von Bruchteilen eines Millimeters bis zu Zentimetern, so daß die optimale Gestaltung der Stützschicht 4 dem jeweiligen Einsatzzweck angepaßt werden kann. Gut bewährt haben sich Stützschichten 4 aus Papier mit Perforationen von 0,5 bis 2 mm Durchmesser bei einem Abstand der Mittelpunkte zweier benachbarter Löcher von der dreifachen Größe der Radien der Löcher.

Bei dem in den Fig. 1 und 2 gezeigten Ausführungsbeispiel bestehen die Abdeckschichten 1 und 2 aus Papier mit einem Polyäthylenanteil von 80 Gewichts-% oder mehr und die Polyäthylenfasern bzw. -fibride 8 sind schematisch in Fig. 2 angedeutet. Da derartige Abdeckschichten gut bedruckt oder kopiertechnisch bebildert werden können, können sie an ihren Innenseiten, die den Kernschichten 3' bzw. 3" zugewandt sind, mit Informationen und Sicherungsmerkmalen versehen werden. In solchen Papieren mit geringem Zellulose- und/oder Pigmentanteil können schon bei der Herstellung Sicherungsmerkmale in Form von wasserzeichenhaltigen Merkmalen eingebracht werden. Auf den beiden Kernschichten 3' und 3", die aus dem gleichen Material wie die Abdeckschichten 1 und 2 bestehen, sind gleichfalls Informationen und Sicherungsmerkmale aufgedruckt.

In der Stützschicht 4 sind die Perforationen, d.h. die Löcher 7 in Gestalt von Zufallsmustern mit statistisch unregelmäßiger, aber für den Hersteller reproduzierbarer Lochverteilung und Lochform angeordnet. Die Löcher 7 können auch die Gestalt von bestimmten Zeichen wie Wappen oder Hoheitszeichen annehmen und bilden als solche ein zusätzliches Sicherungsmerkmal. Die Stützschicht 4 ist im Bereich des Kartenrandes sehr stark, im Extremfall durchgehend, perforiert und umgibt die Karte außenherum geschlossen. Beim Verpressen der einzelnen Schichten der Identitätskarte verbinden sich die beiden Kernschichten 3' und 3" durch die Perforationen der Stützschicht 4 hindurch, wie dies aus Fig. 1 ersichtlich ist. Auch kann die Stützschicht 4 selbst Träger von weiteren Sicherungsmerkmalen in Form von Sicherungsdrucken oder bei Papier von Wasserzeichen oder bei Siebdruckgeweben von Maschenmustern sein.

In der beschriebenen Identitätskarte können auch andere bekannte Sicherungsmerkmale eingebaut werden, wie beispielsweise Hologramme, Spezielle innere Sicherheitsdrucke und verschlüsselte, personenbezogene Angaben.

Es kann auch zweckmäßig sein, die zwar festen, jedoch weichen Polyäthylenfolien durch härtere Folien zu schützen. Um dies zu erreichen, können für die äußeren Abdeckschichten Folienverbunde aus Polyesterfolien mit Polyäthylenfolien verwendet werden. Die Verpressung der einzelnen Schichten erfolgt dann auf der Seite der Polyäthylenfolien.

## Patentansprüche

1. Identitätskarte aus zumindest einer äußeren transparenten thermoplastischen Abdeckschicht und einer thermoplastischen Kernschicht, mit der Identifizierung des Karteninhabers dienenden Informationen an geeigneter Stelle auf einer oder mehreren Schichten und mit zusätzlichen Sicherungsmerkmalen, wie Guilloche-Figuren, gegen Fälschungen, dadurch gekennzeichnet, daß die Kernschicht (3', 3") mehrschichtig ist und aus einem Material mit eingearbeiteten Fasern bzw. Fibriden besteht, im Inneren eine Stützschicht (4) enthält, die perforiert ist, daß die Stützschicht (4) im Randbereich stärker als im Schichtinneren perforiert ist und daß das Material der Stützschicht (4) beim Zusammenfügen der Kartenschichten unter Druck und Wärme bis zu 180°C formstabil ist.

2. Identitätskarte nach Anspruch 1, dadurch gekennzeichnet, daß das Material der Kernschicht ein Papierfilz mit Polyäthylenfasern oder -fibriden ist.

3. Identitätskarte nach Anspruch 2, dadurch gekennzeichnet, daß der Anteil an Polyäthylenfasern zumindest 50 Gewichts-% beträgt.

4. Identitätskarte nach Anspruch 3, dadurch gekennzeichnet, daß der Anteil an Polyäthylenfasern 80 Gewichts-% oder mehr beträgt.

5. Identitätskarte nach den Ansprüchen 2 bis 4, dadurch gekennziechnet, daß dem Papierfilz Pigmente zugesetzt sind, deren Gewichtsanteil 8 bis 14% beträgt.

6. Identitätskarte nach Anspruch 1, dadurch gekennzeichnet, daß die Stützschicht (4) Löcher (7) mit einem Durchmesser von 0,5 mm bis 2 mm als Perforationen aufweist und daß der Abstand der Mittelpunkte zweier benachbarter Löcher von der dreifachen Größe der Radien der Löcher ist.

7. Identitätskarte nach Anspruch 6, dadurch gekennzeichnet, daß in der Stützschicht (4) die Perforationen in Gestalt von Zufallsmustern als Sicherungsmerkmale angeordnet sind.

8. Identitätskarte nach Anspruch 1, dadurch gekennzeichnet, daß die Stützschicht (4) aus zumindest einer Polyester-Folie besteht.

9. Identitätskarte nach Anspruch 1, dadurch gekennzeichnet, daß die Stützschicht (4) aus Siebdruckgewebe besteht.

10. Identitätskarte nach den Ansprüchen 1 bis 9, dadurch gekennzeichnet, daß das Material für die Abdeckschichten (1, 2) aus Papierfilz mit einem Anteil an Polyäthylenfasern über 80 Gewichts-% besteht.

11. Identitätskarte nach den Ansprüchen 1 bis 10, dadurch gekennzeichnet, daß auf den Abdeckschichten (1, 2) Sicherungsmerkmale und/oder Informationsdaten aufgebracht sind.

## Revendications

1. Carte d'identité comprenant au moins une couche de couverture extérieure thermoplastique et transparente et une âme ou couche de base thermoplastique et comportant, en bonne place, sur une ou plusieurs couches des informations servant à l'identification du possesseur de la carte et des marques de sûreté complémentaires, comme des guillochages, pour la protection contre les falsifications, caractérisé en ce que la couche de base (3', 3") est formée de plusieurs couches et constituée par un matérial auquel on a incorporé des fibres ou des fibrilles, qui contient intérieurement une couche de support (4) qui est perforée, en ce que cette couche de support (4) est plus fortement perforée dans la zone marginale qu'à l'intérieur de la couche et en ce que le matériel qui constitue la couche de support (4) garde une forme stable jusqu'à 180°C lors de l'assemblage des cartes sous l'action de la pression et de la chaleur.

2. Carte d'identité selon la revendication 1, caractérisée en ce que le matériel qui constitue la couche de base est un feutre de papier comportant des fibres ou des fibrilles de polyéthylène.

3. Carte d'identité selon la revendication 2, caractérisée en ce que le pourcentage en poids des fibres de polyéthylène est au moins de 50%.

4. Carte d'identité selon la revendication 3, caractérisée en ce que le pourcentage en poids des fibres de polyéthylène est de 80% ou davantage.

5. Carte d'identité selon l'une quelconque des revendications 2 à 4, caractérisée en ce qu'on ajoute au feutre de papier des pigments dont le pourcentage en poids est de 8 à 14%.

6. Carte d'identité selon la revendication 1, caractérisée en ce que la couche de support (4) comporte comme perforations des trous (7) de 0,5 à 2 mm de diamètre dont l'écartement, mesuré entre les centres de deux trous voisins, est le triple de la grandeur des rayons des trous.

7. Carte d'identité selon la revendication 6, caractérisée en ce que dans la couche de support (4) les perforations sont réparties au hasard comme marques de sûreté.

8. Carte d'identité selon la revendication 1, caractérisée en ce que la couche de support (4) est constituée par au moins une feuille de polyester.

9. Carte d'identité selon la revendication 1, caractérisée en ce que la couche de support (4) est constituée par un tissu à sérigraphie.

10. Carte d'identité selon l'une des revendications 1 à 9, caractérisée en ce que le matériel constituant les couches de couverture (1, 2) est composé de feutre de papier comportant un pourcentage en poids de fibres de polyéthylène supérieur à 80%.

11. Carte d'identité selon l'une des revendications 1 à 10, caractérisée en ce que les couches de couverture (1, 2) portent des marques de sûreté et/ou des données d'information.

## Claims

1. An identity card, consisting of at least one outer transparent thermoplastic covering layer and a thermoplastic core layer carrying, at a suitable point on one or more layers, information which serves to identify the cardholder, and having additional security markings, such as guilloche figures, as protection against forgeries, characterised in that the core layer (3', 3") is multilayered and consists of a material with incorporated fibers, respectively fibrids, comprising in the interior a support layer (4) which is perforated, in that the support layer (4) is more extensively perforated in the edge region than in the interior of the support layer and in that the material of the support layer (4) is dimensionally stable during assembly of the layers under pressure and at elevated temperatures of up to 180°C.

2. An identity card as claimed in claim 1, characterised in that the material of the core layer is a paper felt with polyethylene fibers or polyethylene fibrids.

3. An identity card as claimed in claim 2, characterised in that the proportion of polyethylene fibers is at least 50% by weight.

4. An identity card as claimed in claim 3, characterised in that the proportion of polyethylene fibers is 80% by weight or higher.

5. An identity card as claimed in any of claims 2 to 4, characterised in that pigments, the proportion of which is 8 to 14% by weight, are added to the paper felt.

6. An identity card as claimed in claim 1, characterised in that the perforations of the support layer (4) are holes (7) of a diameter of 0.5 mm to 2 mm and in that the distance between centers of two adjacent holes is about  e times the radii of the holes.

7. An identity card as claimed in cl. 3, characterised in that the perforations in the upport layer (4) are arranged in the form of random patterns as security markings.

8. An identity card as claimed in claim 1, characterised in that the support layer (4) consists of at least one polyester film.

9. An identity card as claimed in claim 1, characterised in that the support layer (4) consists of a screen texture.

10. An identity card as claimed in any of claims 1 to 9, characterised in that the material of the covering portion (1, 2) consists of a paper felt containing a proportion of polyethylene fibers of more than 80% by weight.

11. An identity card as claimed in any of claims 1 to 10, characterised in that security markings and/or information data are applied to the covering layers (1, 2).

## FIG.1

## FIG.2